(19) Europäisches Patentamt
European Patent Office
Office européen des brevets

(11) **EP 2 123 937 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(51) Int Cl.:
*F16H 7/06* *(2006.01)* *B66B 23/02* *(2006.01)*

(21) Anmeldenummer: **09011640.1**

(22) Anmeldetag: **25.10.2002**

(54) **Gelenkkettenantrieb**

Link chain drive

Entraînement de chaîne

(84) Benannte Vertragsstaaten:
**AT BE BG CH CY CZ DE DK EE ES FI FR GB GR IE IT LI LU MC NL PT SE SK TR**

(30) Priorität: **26.10.2001 DE 10152303**
**29.05.2002 DE 10224232**

(43) Veröffentlichungstag der Anmeldung:
**25.11.2009 Patentblatt 2009/48**

(62) Dokumentnummer(n) der früheren Anmeldung(en) nach Art. 76 EPÜ:
**02801914.9 / 1 440 255**

(73) Patentinhaber: **Ketten-Wulf Betriebs-GmbH**
**59889 Eslohe-Kückelheim (DE)**

(72) Erfinder: **Grobbel, Burkhard**
**57392 Schmallenberg (DE)**

(74) Vertreter: **Brune, Axel et al**
**Fritz Patent- und Rechtsanwälte**
**Postfach 1580**
**59705 Arnsberg (DE)**

(56) Entgegenhaltungen:
**DE-C- 512 013     DE-C- 576 950**
**US-A- 2 767 592**

**Beschreibung**

Technisches Gebiet

Die Erfindung betrifft einen Gelenkkettenantrieb, insbesondere als Zwischenantrieb für eine gestreckte Gelenkkette, enthaltend ein Antriebskettenrad für eine Gelenkkette. Ferner betrifft sie ein Verfahren für den Antrieb einer Gelenkkette bzw. des Antiebskettenrades einer Gelenkkette, insbesondere für den Zwischenantrieb einer gestreckten Gelenkkette. Des Weiteren betrifft die Erfindung eine Gelenkkettenführung sowie ein Verfahren zur Führung einer um ein Umlenkrad umlaufenden Gelenkkette.

Stand der Technik

Gelenkketten werden als flexible Zugmittel zur Übertragung von Kräften eingesetzt. Sie bestehen aus starren und im Wesentlichen untereinander identischen Kettengliedern, welche sukzessive in Gelenkdrehpunkten miteinander gekoppelt sind. Der Abstand zwischen zwei benachbarten Gelenken wird dabei als Teilung der Gelenkkette bezeichnet Gelenkketten werden in der Regel geschlossen hergestellt und dann endlos umlaufend um mindestens zwei Kettenräder geführt Die Gelenkkette wirkt dabei als Antriebskette zur Übertragung mechanischer Leistung von einer Welle auf die andere, wenn eines der beiden Räder angetrieben und eine mechanische Leistung vermöge der Gelenkkette auf das andere Rad übertragen wird. Eine weitere häufig anzutreffende Anwendung von Gelenkketten besteht darin, dass von der Kette beziehungsweise von zwei oder mehreren parallel verlaufenden Gelenkketten ein Fördergut (Rohmaterial, Bauteile etc.) Ober eine bestimmte Strecke gefördert wird. Derartige Gelenkketten werden als Förderketten bezeichnet.

Der Antrieb von Gelenkketten erfolgt in den meisten Fällen durch rotierende Antriebskettenräder mit radial abstehenden Fortsätzen oder Zähnen, die in die Gelenkkette eingreifen und eine Zugkraft auf die Kettenglieder ausüben. Die Kette kann dabei das Antriebskettenrad sowohl umschlingen, das heißt am Antriebskettenrad eine Richtungsumkehr von typischerweise 90° bis 180° erfahren, als auch gestreckt am Antriebskettenrad vorbeilaufen, so dass Letzteres nur entlang einer kurzen Wegstrecke in die Gelenkkette eingreift Bei dem letztgenannten Zwischenantrieb einer gestreckten Kette kommt es durch die Abweichung des Antriebskettenrades von der idealen Kreisform zu einer Relativbewegung zwischen der Gelenkkette und dem gerade kraftübertragend hierein eingreifenden Zahn, was aufgrund der dabei wirksamen Zugkräfte zu einem hohen Verschleiß führt.

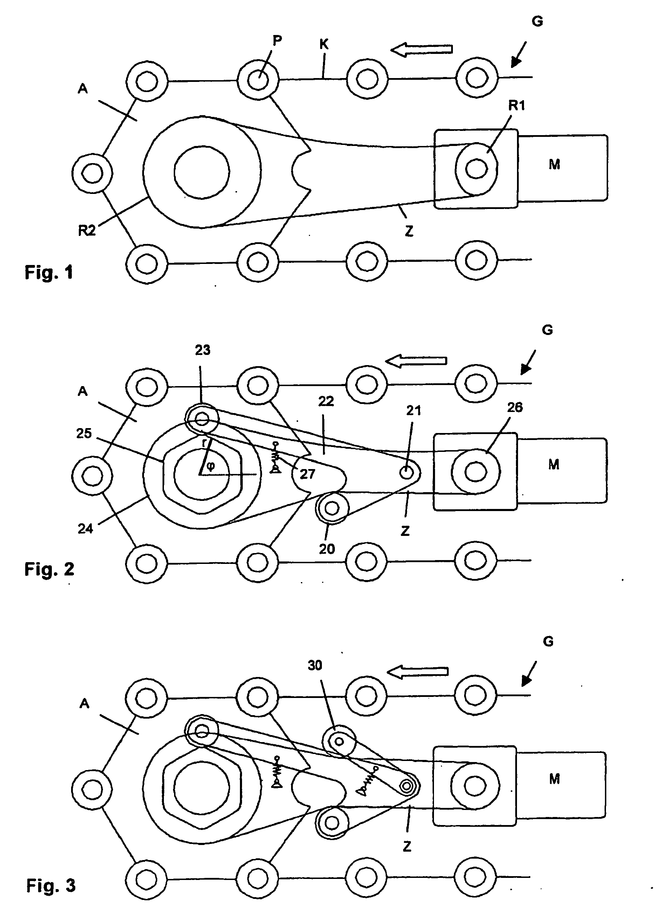

Figur 1 zeigt einen Gelenkkettenantrieb für eine Gelenkkette G. Die aus einzelnen Kettengliedern K bestehende Gelenkkette G ist dabei nur teilweise in dem Bereich dargestellt, in dem sie um das Antriebskettenrad A herumläuft. Da Gelenkketten anders als etwa flexible Antriebsriemen aus starren Kettengliedern K bestehen, entspricht das Antriebskettenrad A funktional einem Polygon, wobei die Seitenlänge des Polygons gleich der Teilung der Gelenkkette G ist Wenn das Antriebskettenrad A mit gleichförmiger Drehzahl von einem Motor M über ein Zugmittel Z wie etwa einen Zahnriemen oder eine weitere Gelenkkette angetrieben wird, verursacht dies in der Gelenkkette G eine ungleichförmige Bewegung, welche unter dem Stichwort "Polygoneffekt" bekannt ist. Des Weiteren verursacht jedes Auftreffen eines Gelenkdrehpunktes P zwischen zwei Kettengliedern K auf das Antriebskettenrad A einen kurzen Stoßimpuls in der Kette, welcher sich belastend auf die

Kette auswirkt Durch eine kleine Teilung der Gelenkkette G kann der Polygoneffekt zwar gering gehalten werden, jedoch ist eine solche kleine Teilung gerade bei langen Förderketten sehr kostenaufwendig. Durch die ungleichförmige Geschwindigkeit der Gelenkkette G entstehen hierin stark belastende periodische Beschleunigungen, welche sich auch auf ein gefordertes Gut ungünstig auswirken können.

Es ist daher im Stand der Technik vorgeschlagen worden, das Antriebskettenrad A mit einer periodisch ungleichförmigen Drehzahl anzutreiben, welche gerade so gewählt ist, dass die durch die polygonale Form des Antriebskettenrades A entstehenden Geschwindigkeitsschwankungen bei der Bewegung der Gelenkkette G ausgeglichen werden. Zur Erzeugung der ungleichförmigen Drehzahl kann zum Beispiel ein Asynchronmotor mit entsprechend variierten Frequenzen angesteuert bzw. versorgt werden (vgl. DE 30 18 357 C2). Gemäß einem anderen, in Figur 1 angedeuteten Vorschlag wird das mit dem Antriebsmotor M unmittelbar gekoppelte Rad R1 mit einer speziellen Umfangsform ausgebildet, welche quasi einen den Polygoneffekt kompensierenden Antrieb des Antriebskettenrades A erzeugt (vgl. DE 30 31 130 C2, DD 247 731 A1). Nachteilig bei dieser Lösung ist jedoch, dass in den Knickbereichen des kurvenförmigen Rades R1 eine hohe Flächenpressung und damit ein hoher Verschleiß auftritt. Ferner ist die Herstellung eines solchen Rades mit einer typischerweise polygonalen Umfangsform und mit darin eingearbeiteten Zähnen sehr aufwendig und daher sehr teuer.

Des Weiteren ist aus der DE 199 36 742 A1'ein Antrieb bekannt, welcher zwei zusammenwirkende Unrundräder zur Erzeugung einer ungleichförmigen Drehzahl enthält. Auch ein solcher Antrieb ist jedoch verhältnismäßig aufwendig und teuer in der Realisierung.

Um den oben genannten Problemen eines Zwischenantriebes zu begegnen wird in der

DE 199 45 921 A1 ein Antriebskettenrad vorgeschlagen, bei welchem die Zähne schwenkbeweglich um eine jeweilige individuelle Drehachse am Antriebsrad angebracht sind, wobei ferner jeder Zahn eine Abtastrolle aufweist, welche an einer ortsfesten Kurvenscheibe entlang fährt. Bei einer Drehung des Antriebsrades führen die Zähne somit eine dieser Drehung überlagerte Schwenkbewegung aus, welche bei entsprechender Formgebung der Kurvenscheibe dazu ausgenutzt werden kann, den Polygoneffekt zu reduzieren. Es kommt jedoch weiterhin zu einem Verschleiß der Gelenkkette sowie der Zähne durch die Relativbewegung zwischen ihr und den Zähnen. Aus der DE512013 ist ein gelenkkettentrieb mit den Merkmalen des Oberbegriffes des Anspruchs 1 bekannt.

Aufgabe und Lösung

Vor diesem Hintergrund war es Aufgabe der vorliegenden Erfindung, einen verbesserten Gelenkkettenantrieb bereitzustellen, welcher den Polygoneffekt, den Kettenverschleiß sowie die Geräuschentwicklung minimiert.

Diese Aufgabe wird durch Gelenkkettenantriebe, Gelenkkettenführungen sowie Verfahren mit den Merkmal des unabhängigen Anspruchs gelöst. Vorteilhafte Ausgestaltungen sind in den Unteransprüchen enthalten. Die Gegenstände der verschiedenen Ansprüche können beliebig miteinander kombiniert werden.

Unter einem "Antriebssystem" soll dabei hier und im Folgenden in einem weiten Sinne jedes System verstanden werden, welches Kräfte bzw. Drehmomente an das Antriebskettenrad abgeben kann. Dies umfasst insbesondere Antriebssysteme im engeren Sinne, bei welchen die genannten Kräfte bzw. Drehmomente aktiv erzeugt werden, z.B. mit einem Elektromotor. Eingeschlossen sind jedoch auch "passive" Antriebssysteme, bei denen die genannten Kräfte bzw. Drehmomente Trägheitssystemen wie z. B. einer rotierenden Schwungmasse entnommen werden.

Zwei Bewegungen sollen hierbei und im Folgenden "synchron" genannt werden, wenn sie markante Bewegungszustände gleichzeitig oder mit einem konstanten Zeitversatz durchlaufen. Insbesondere werden zwei periodische Bewegungen synchron genannt, deren Frequenzverhältnis rational (ein Verhältnis zweier ganzer Zahlen) ist

Gemäß der Ausführungsform des zugrunde liegenden Gelenkkettenantriebs mit einem Antriebskettenrad für eine Gelenkkette und einem Antriebssystem ungleichförmiger Drehzahl enthält das Antriebssystem die folgenden Elemente:

- einen Motor, insbesondere einen Elektromotor (Getriebemotor), dessen Rotor (in Drehung versetztes Bauteil) mit dem Antriebskettenrad gekoppelt ist und dessen Stator (an der Drehung nicht teilnehmendes Bauteil) beweglich ist;

- einen Mechanismus zur Bewegung des Stators synchron zur Drehung des Antriebskettenrades.

Der genannte Mechanismus enthält dabei ein mit dem Antriebskettenrad zusammenwirkend gekoppeltes Kurvenelement, welches von einem Abtastelement abgetastet wird, wobei die erzeugte Relativbewegung zwischen dem Kurvenelement und dem Abtastelement auf den Stator des Motors übertragen wird.

Aus dem Stand der Technik ist es bekannt, das Antriebskettenrad eines Gelenkkettenantriebs mit einem Motor wie zum Beispiel einem Elektromotor anzutreiben, dessen Rotor auf der Welle des Antriebskettenrades sitzt beziehungsweise hiermit zusammenwirkend gekoppelt ist (z.B. über ineinandergreifende Zahnräder) und dessen Stator sich an einer sogenannten Drehmomentstütze abstützt, um sich bei einer Aktivität des Motors nicht mitzudrehen. Der Stator wird häufig in seinen übrigen Freiheitsgraden nicht fixiert, damit er sich bei Ungenauigkeiten und Schwankungen im Antrieb ausgleichend bewegen kann. Bei dem erfindungsgemäßen Gelenkkettenantrieb wird nunmehr (vorzugsweise Ober einen Abtastmechanismus) der Stator derart bewegt, dass seine dem Rotor überlagerte Bewegung am Antriebskettenrad die gewünschte ungleichförmige Drehzahl erzeugt, welche Geschwindigkeitsschwankungen der Gelenkkette ausgleicht Auch dieser Mechanismus lasst sich sehr einfach und damit kostengünstig und störungssicher realisieren, da lediglich ein mit dem Antriebskettenrad gekoppeltes Kurvenelement abgetastet und die Abtastung auf den Stator übertragen werden muss.

Vorzugsweise ist das Kurvenelement mit dem Stator des Motors drehbeweglich verbunden, und es fährt an mindestens einem ortsfesten Abtastelement entlang. Das bei einer Drehung des Antriebskettenrades bewegte Kurvenelement hebt und senkt den Stator somit entsprechend seiner mit dem Abtastelement in Verbindung stehenden Kurvenform. Selbstverständlich wäre es auch möglich, das Kurvenelement mit einer ortsfesten Drehachse zu befestigen und das Abtastelement fest mit dem Stator zu verbinden. Eine derartige Anordnung würde kinematisch dasselbe Ergebnis liefern. Gemäß einer Weiterbildung des GelenkkettenanMebs enthält dieser zwei Abtastelemente und/oder zwei Kurvenelemente, wobei je nach Drehrichtung des Antriebskettenrades der Gelenkkette eines der genannten Elemente (Abtastelement oder Kurvenelement) wirksam ist Wie oben bereits erläutert wurde, gibt es Anwendungen, bei denen die Gelenkkette wahlweise in beiden Richtungen anzutreiben ist Einem solchen Fall trägt die geschilderte Weiterentwicklung Rechnung, da jeder Bewegungsrichtung ein eigenes Abtastelement beziehungsweise ein eigenes Kurvenelement zur Erzeugung der gewünschten Kompensationsbewegung des Stators zugeordnet ist.

Gemäß einer bevorzugten Ausgestaltung des Gelenkkettenantriebs ist das Kurvenelement auf der Welle des Antriebskettenrades angeordnet und das Abtastelement am Arm eines mit dem Stator verbundenen Hebels. Die Anordnung des Kurvenelementes auf der Welle des Antriebskettenrades stellt in besonders einfacher Weise die synchrone Drehung zwischen dem Antriebskettenrad und dem Kurvenelement sicher. Die Bewegung des Kurvenelementes wird dabei von dem Abtastelement abgetastet, welches seine Bewegung über den Hebel in der gewünschten Weise auf den Stator überträgt.

Kurze Beschreibung der Figuren

Im Folgenden wird die Erfindung mit Hilfe der Figuren beispielhaft erläutert Die Figuren 1-26 zeigen jeweils einen Getenkkettenantrieb im Bereich des Antriebskettenrades der Gelenkkette, und insbesondere:

Fig. 1          einen Gelenkkettenantrieb nach dem Stand der Technik;

Fig. 2          einen nicht beanspruchten Gelenkkettenantrieb mit einer Veränderung des Lasttrums eines Zugmittels;

Fig. 3          einen nicht beanspruchten Gelenkkettnantrieb nach Figur 2 mit zusätzlicher Spannrolle im Leertrum;

Fig. 4          einen nicht beanspruchten Gelenkkettenantrieb mit zwei Spannrollen bei einer Drehung im Uhrzeigersinn und gegen den Uhrzeigersinn;

Fig. 5          einen nicht beanspruchten Gelenkkettenantrieb mit einer unrunden Spannrolle am Lasttrum;

Fig. 6          einen nicht beanspruchten Gelenkkettenantrieb mit je einer unrunden Spannrolle am Lasttrum und am Leertrum bei einer Drehung im Uhrzeigersinn und gegen den Uhrzeigersinn;

Fig. 7a         einen Gelenkkettenantrieb mit einem periodisch ausgelenkten Antriebsmotor

Fig. 7b         einen nicht beanspruchten Gelenkkettenantrieb mit einem exzentrisch angebrachten antreibenden Rad;

Fig. 8          einen Gelenkkettenantrieb mit einer Bewegung des Stators eines Antriebsmotors gemäß einer am Motor angebrachten Kurvenscheibe;

Fig. 9          einen Gelenkkettenantrieb nach Figur 8 mit zusätzlichen Spannrollen an Lasttrum und Leertrum;

Fig. 10         einen Gelenkkettenantrieb entsprechend Figur 8 mit Abtastelementen für beide Drehrichtungen der Gelenkkette;

Fig. 11         einen Gelenkkettenantrieb entsprechend Figur 10 mit einer Baueinheit für die Abtastelemente;

Fig. 12 bis 18  Gelenkkettenantriebe mit einem Kurvenelement auf der Achse des Antriebsketten- rades und einem Hebelmechanismus zur Übertragung der abgetasteten Bewegung auf den Antriebsmotor;

Fig. 19         einen Gelenkkettenantrieb mit einem Stellmechanismus zur Bewegung des Motors;

Fig. 20         einen nicht beanspruchten Gelenkkettenantrieb mit einem Kurbelmechanismus zur Bewegung des Motors;

Fig. 21 bis 25  nicht beanspruchten Gelenkkettenführungen mit einem beweglichen Stützelement;

Fig. 26         eine nicht beanspruchten Gelenkkettenführung bei einem abknickenden Verlauf der Gelenkkette.
                Die Figuren 27 bis 30 zeigen "passive" Gelenkkettenantriebe, bei denen eine Schwungmasse mit dem Antriebskettenrad zusammenwirkend gekoppelt ist, und zwar zeigt im Einzelnen:

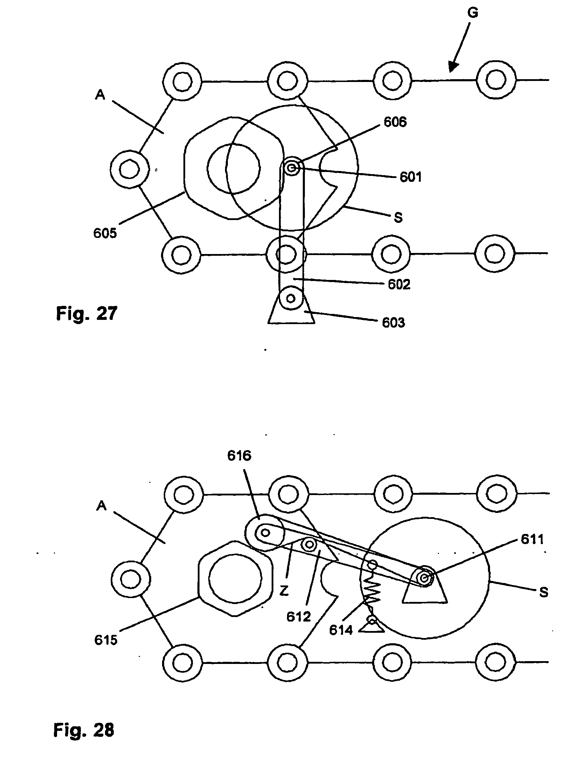

Fig. 27         einen nicht beanspruchten Gelenkkettenantrieb, bei dem eine mit der Welle der Schwungmasse gekoppelte Scheibe auf einer Kurvenscheibe an der Welle des Umlenkrades abrollt;

Fig. 28         einen nicht beanspruchte Gelenkkettenantrieb, bei dem eine mit der Welle der Schwungmasse gekoppelte Scheibe über ein Zugmittel mit einer mit dem Umlenkrad gekoppelten Kurvenscheibe in

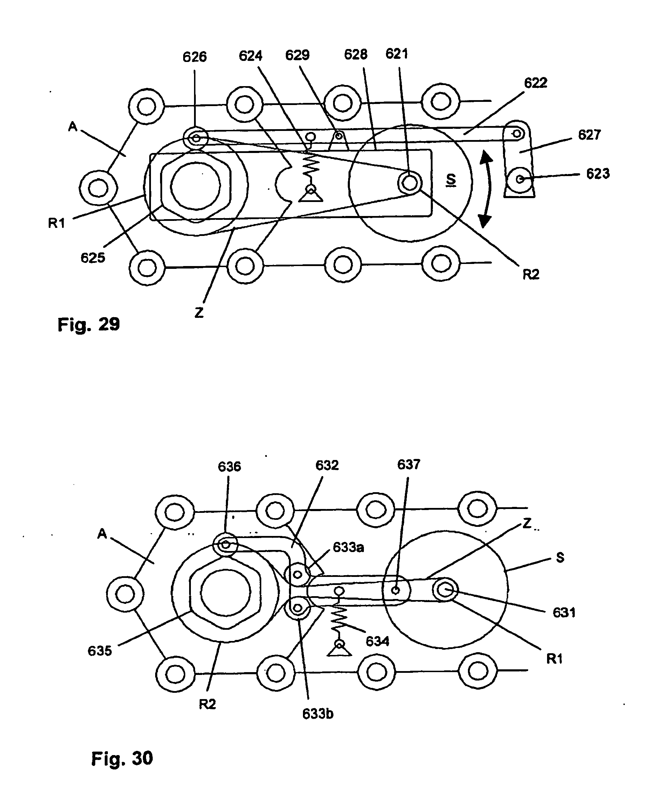

Fig. 29         Wirkverbindung steht; einen nicht beanspruchte Gelenkkettentrieb, bei dem die Schwungmasse synchron zur Drehung des geschwenkt wird;

Fig. 30         Umlenkrades eine nicht beanspruchte Gelenkkettenantrieb, bei dem die Welle der Schwungmasse über ein Zugmittel mit dem Umlenkrad gekoppelt ist und die effektive Länge des Lasttrums des Zugmittels variiert wird.

Die restlichen Figuren zeigen einen Zwischenantrieb für eine Gelenkkette, und zwar

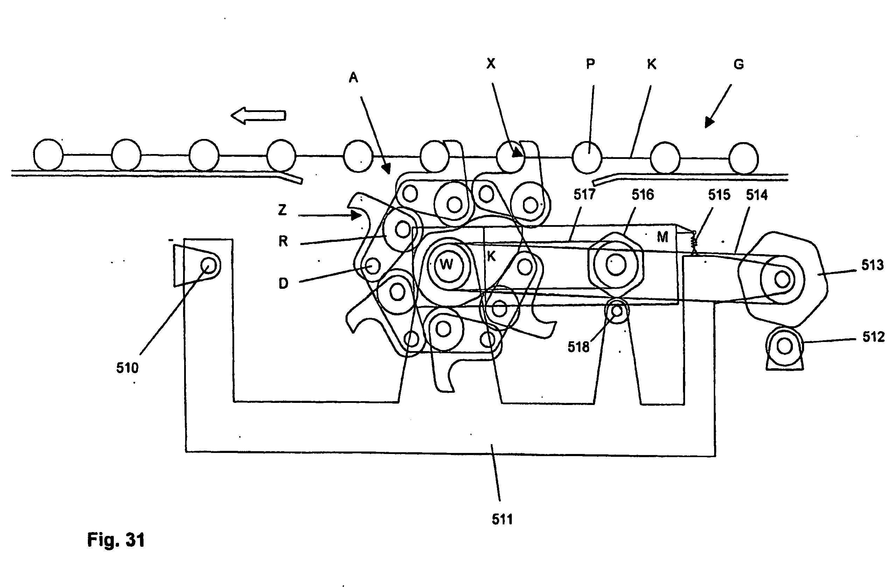

Fig. 31         mit einem in einem Drehpunkt gelagerten Träger des Antriebsrades;

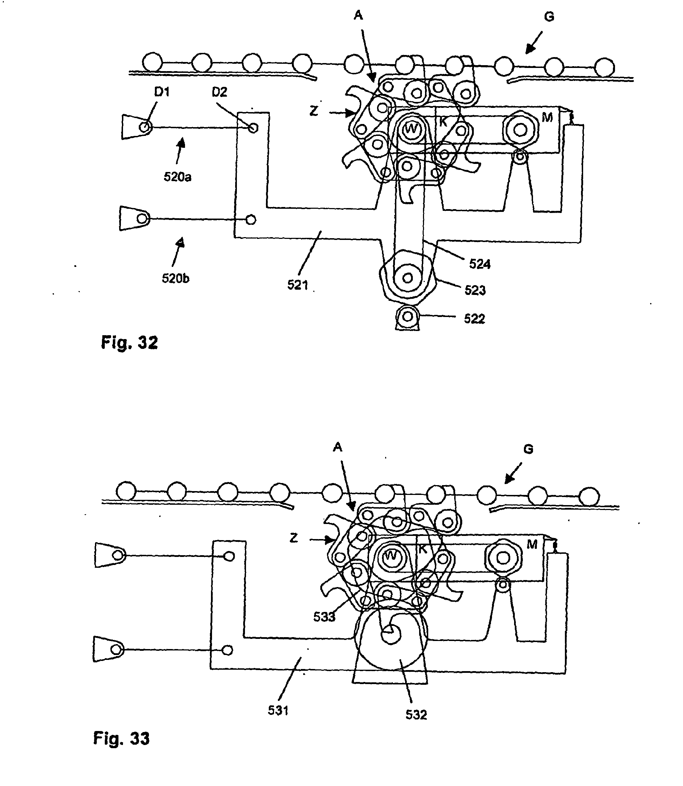

Fig. 32         mit einem in einem Parallelogrammgelenk gelagerten Träger;

Fig. 33         mit einem auf der Welle angeordneten Kurvenrad K zur Auslenkung des Antriebsrades;

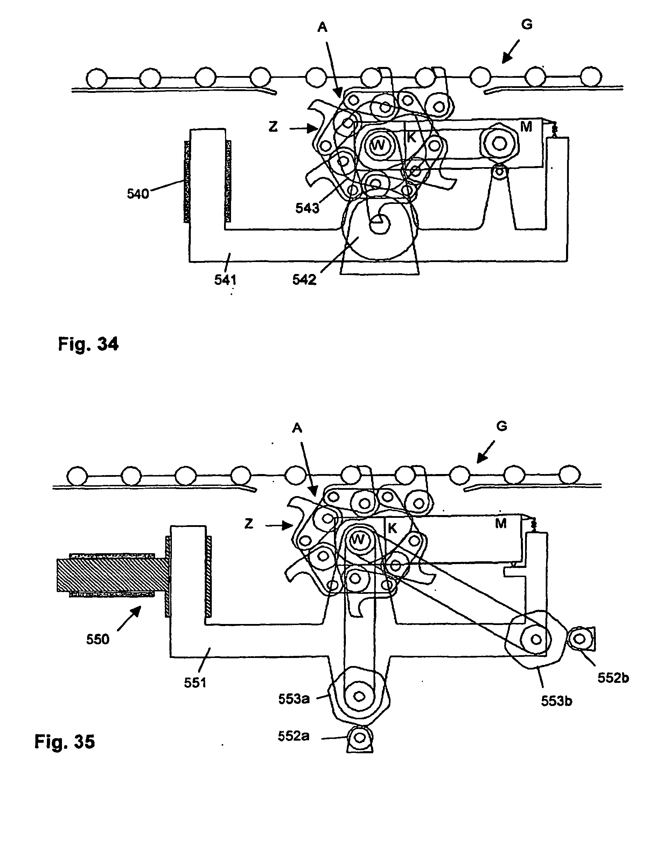

Fig. 34         mit einer linearen Führung des Trägers;

Fig. 35         mit einer biaxialen linearen Führung des Trägers und zwei Kurvenrädern;

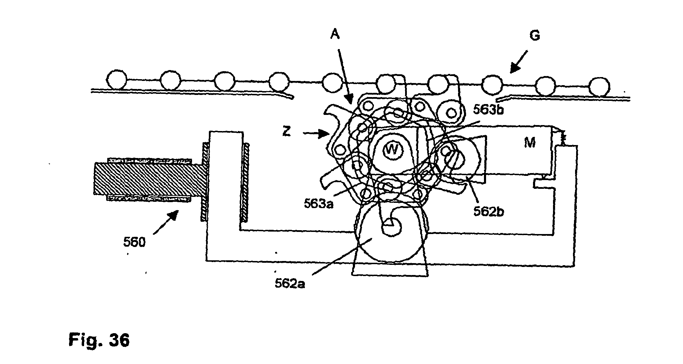

Fig. 36         mit einer biaxlalen linearen Führung des Trägers und zwei auf der Welle angeordneten Kurvenrädern.

## Detaillierte Beschreibung der Figuren

Figur 1 stellt einen Gelenkkettenantrieb nach dem Stand der Technik dar und wurde eingangs bereits erläutert. Die in dieser Figur verwendeten Bezugszeichen sollen auch für die übrigen Figuren gelten, sofern die entsprechenden Teile gleich bleiben. Weiterhin sei darauf hingewiesen, dass alle Figuren nur die Konturen der Bauteile darstellen. d.h. die Bauteile selbst sind transparent Eine erste nicht beanspruchten Ausgestaltung eines ungleichförmigen Antriebs für das Antriebskettenrad A einer Gelenkkette G ist in Figur 2 dargestellt im Unterschied zum Stand der Technik nach Figur 1 sind bei diesem Gelenkkettenantrieb sowohl das treibende Rad 26 als auch das angetriebene Rad 24, welches mit dem Antriebskettenrad A des Gelenkkettenantriebs gekoppelt ist beziehungsweise auf dessen Welle sitzt, in herkömmlicher Weise kreisrund ausgebildet. Die Herstellung solcher Räder ist daher verhältnismäßig einfach und standardisiert Die Ungleichförmigkeit der Übertragung der gleichförmigen Drehung des treibenden Rades 26 auf das angetriebene Rad 24 wird erfindungsgemäß dadurch verursacht, dass der Lasttrum dieses Antriebs (d.h. in Figur 2 der untere Abschnitt des Zugmittels Z bei einer Drehung des Antriebskettenrades A gegen den Uhrzeigersinn) von einer Spannrolle 20 verschieden stark eingedrückt wird, so dass sich seine effektive Länge ändert. Das Ausmaß des Eindrückens des Lasttrums wird dabei von einem

Abtastmechanismus gesteuert, welcher eine Abtastrolle 23 enthält, die über einen spitzwinkligen, im ortsfesten Drehpunkt 21 gelagerten und mit der Spannrolle 20 verbundenen Hebel 22 getragen wird. Die Abtastrolle 23 liegt an dem Umfang einer auf der Welle des Antriebskettenrades A angeordneten Kurvenscheibe 25 an und tastet deren Kurvenform ab. Eine Feder 27 sorgt dabei auch dann für einen Kontakt zur Kurvenscheibe 25, wenn im Lasttrum keine Spannung herrschen sollte. Die äußere Form dieser Kurvenscheibe kann empirisch oder theoretisch in einfacher Weise so bestimmt werden, dass je nach den konkreten konstruktiven Gegebenheiten eine derartige Ungleichförmigkeit der Drehzahl des Antriebskettenrades A entsteht, die Geschwindigkeitsschwankungen der Gelenkkette G möglichst gut ausgleicht. Eine mögliche Kurvenform wird z. B. durch die folgende

Abhängigkeit des Radius r der Kurvenscheibe vom Polarwinkel φ (gemessen zwischen einem Referenzradius und dem betrachteten Radius in der Einheit rad) beschrieben:

$$r(\varphi) = R0 + d \cdot f(n \cdot \varphi) ,$$

wobei R0 der mittlere Radius, d < R0 die Radiusvariation und n eine natürliche Zahl ist Die Funktion f soll betragsmäßig ≤ 1 und periodisch mit der Periode $2\pi$ sein, $f(x+2\pi)$

= f(x), und kann z.B. durch eine Sinusfunktion oder Sinusähnliche Funktion realisiert werden.

Das Zugmittel Z kann sowohl kraftschlüssig (zum Beispiel als Keilriemen) als auch formschlüssig (zum Beispiel als Gelenkkette oder Zahnriemen) wirken, da ein eventueller Schlupf zwischen den beiden Rädern 26 und 24 für die Kompensationswirkung des Mechanismus unbeachtlich ist.

Bei der in Figur 2 gezeigten sowie bei allen anderen noch zu erläuternden Konstruktionen werden die Lager beweglicher Teile möglichst geräuschdämmend ausgebildet, was zum Beispiel durch die Zwischenschaltung von Kunstoffhülsen geschehen kann.

Bei der in Figur 3 gezeigten nicht beanspruchte Abwandlung des Gelenkkettenantriebs aus Figur 2 ist am Leertrum des Zugmittels Z eine weitere Spannrolle 30 vorgesehen, welche jedoch nicht mit der Abtastung der Kurvenscheibe gekoppelt ist, sondern lediglich unter Wirkung einer Federkraft den Leertrum straff hält.

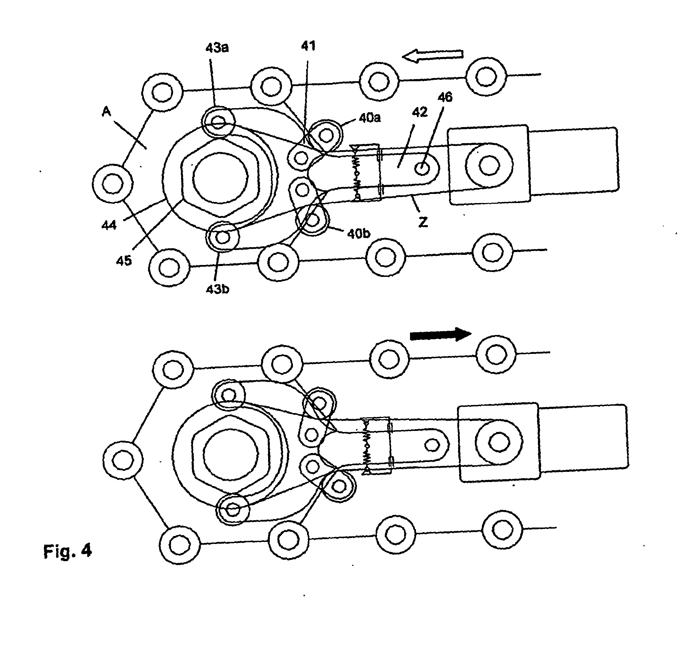

Figur 4 zeigt eine nicht beanspruchte Weiterbildung des Gelenkkettenantriebs, welche für eine Drehung des Antriebskettenrades A in beide Richtungen geeignet ist. Der obere Teil von Figur 4 zeigt dabei eine Drehung des Antriebskettenrades gegen den Uhrzeigersinn und der untere Teil eine Drehung im Uhrzeigersinn (vgl. Pfeile an der Gelenkkette). Bei dieser Ausgestaltung ist der um eine ortsfeste Drehachse 46 schwenkbare Hebel 42 gabelförmig ausgebildet, wobei die Gabel die Kurvenscheibe 45 auf der Welle des Antriebskettenrades A umgreift. Am Hebel sind Ober zwei schwenkbewegliche Arme 41 zwei Spannrollen angeordnet, von denen die eine 40a am oberen Abschnitt und die andere 40b am unteren Abschnitt des Zugmittels Z anliegt Die Arme 41 werden über einen Federmechanismus (nicht dargestellt) in eine möglichst dicht am Hebel 42 anliegende Position gedrängt

Bei der oberen Darstellung von Figur 4 findet eine Drehung des Antriebskettenrades A gegen den Uhrzeigersinn statt Dementsprechend ist der untere Abschnitt des Zugmittels Z der Lasttrum, in welchem eine große Kraft herrscht. Diese spannt den Lasttrum so weit wie möglich, was eine entsprechend große nach unten gerichtete Kraft auf die Spannrolle 40b ausübt. Diese nach unten gerichtete Kraft verursacht zum einen, dass sich der Arm dieser Spannrolle 40b etwa senkrecht zum Hebel 42 stellt, und zum anderen, dass der ganze Hebel 42 nach unten gezogen wird, bis die obere Abtastrolle 43a mit der Kurvenscheibe 45 in Kontakt kommt Ähnlich wie bei dem in Figur 3 dargestellten Mechanismus wird somit die Kurvenscheibe 45 von der Abtastrolle 43a abgetastet und die hierdurch erzeugte Bewegung vermöge der Spannrolle 40b in eine entsprechende Verkürzung des Lasttrums übertragen. Die zweite Spannrolle 40a wirkt in diesem Zustand lediglich als federbelastete Spannrolle für den Leertrum.

Bei einer Änderung der Drehrichtung kehren sich wie im unteren Teil von Figur 4 gezeigt die Funktionen der Spannrollen und Abtastrollen um, wobei dieselbe gewünschte ungleichförmige Drehzahl des Antriebskettenrades A erzeugt wird.

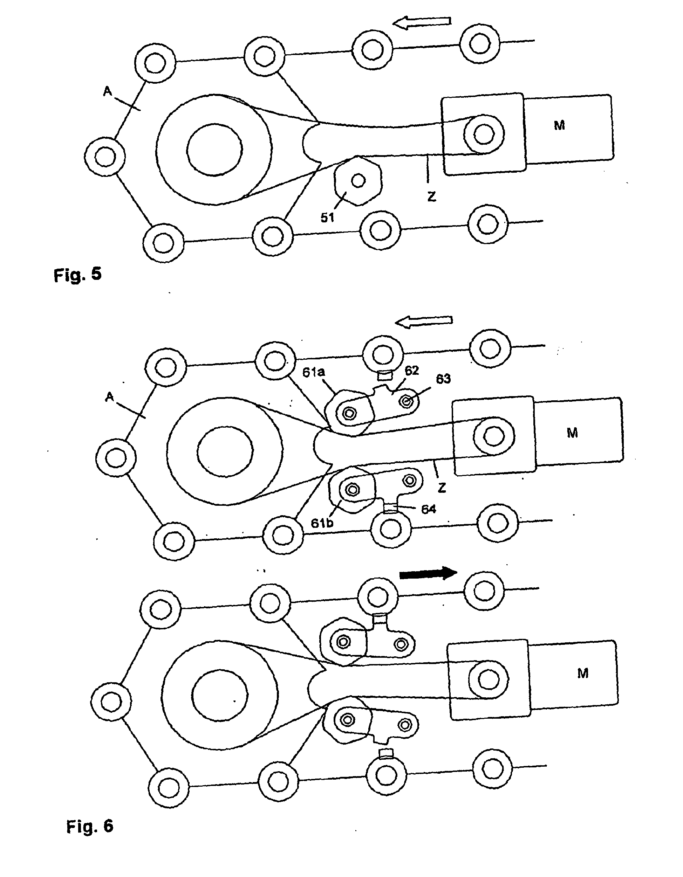

In Figur 5 ist eine alternative Möglichkeit zur Längenveränderung des Lasttrums dargestellt Dabei wirkt ein Unrundrad 51 mit einer ortsfesten Drehachse auf den Lasttrum des Zugmittels Z ein, wobei die Umfangsform des Unrundrades so gewählt ist, dass die gewünschte kompensatorische Ungleichförmigkeit der Drehzahl am Antriebskettenrad A entsteht Das Unrundrad steht vorzugsweise in formschlüssigem Eingriff mit dem Zugmittel Z, so däss es von diesem synchron mitgedreht wird. Alternativ oder zusätzlich kann das Unrundrad natürlich auch auf andere Art synchron mit dem Antriebskettenrad A gedreht werden. Da das Unrundrad keine Antriebsdrehmomente übertragen muss, unterliegt es trotz seiner nicht runden Form nur einem geringen Verschleiß.

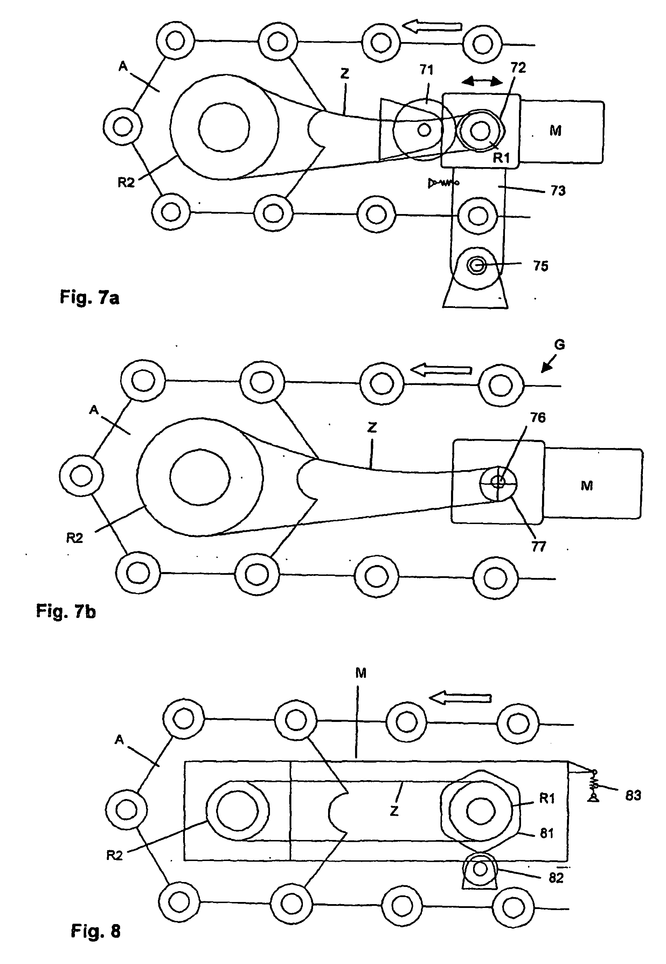

Figur 8 zeigt eine nicht beanspruchte Ausführungsform mit zwei schwenkbeweglich an Hebeln 62 mit der ortsfesten Schwenkachse 63 gelagerten und unter der Wirkung einer Feder an das Zugmittel Z angedrückten Unrundrädern 61a und 61b, von denen eines je nach Drehrichtung des Antriebskettenrades A am jeweiligen Lasttrum und das andere am jeweiligen Leertrum anliegt. Durch die Spannung im Lasttrum wird das hieran anliegende Unrundrad (61b im oberen Teil der Figur bei Drehung des Antriebskettenrades A gegen den Uhrzeigersinn; 61a im unteren Teil der Figur bei Drehung des Antriebskettenrades A Im Uhrzeigersinn) dabei gegen einen ortsfesten Anschlag 64 gedruckt, so dass es sich effektiv wie ein Rad mit ortsfester Drehachse verhält.

Figur 7a betrifft eine erste alternative Möglichkeit zur Längenveränderung des Lasttrums des Zugmittels Z. Hierbei sitzt das antreibende Rad R1 auf der Welle eines Motors M, welcher seinerseits am Ende eines Hebels 73 schwenkbar um eine ortsfeste Drehachse 75 gelagert ist. Auf der Welle des Motors ist ferner eine Kurvenscheibe 72 angeordnet, welche mit einer ortsfesten Abtastrolle 71 derart zusammenwirkt, dass sie den Motor M synchron zum Antriebskettenrad A verschwenkt (s. Doppelpfeil). Das Zugmittel Z erfährt hierdurch eine periodische Streckung, welche die gewünschte ungleichförmige Drehzahl erzeugt.

Figur 7b zeigt eine zweite nicht beanspruchte, alternative Möglichkeit zur Längenveränderung des Lasttrums des Zugmittels Z bzw. zur Veränderung des wirksamen Radius des antreibenden Rades. Hierbei sitzt das antreibende Rad 77 exzentrisch auf der Rotorwelle 76 des Motors M. Bei dem Rad 77 kann es sich um ein kostengünstig herstellbares (rundes) Standardrad handeln. Um eine Phasenverschiebung durch Schlupf zu verhindern, sollte das Rad 77 formschlüssig mit dem Zugmittel Z zusammenwirken (z.B. als Kettenrad und Rollenkette). Wenn das Untersetzungsverhältnis zwischen dem antreibenden Rad 77 und dem angetriebenen Rad R2 gleich der Zähnezahl des Antriebskettenrades A ist (in der Figur also 8:1, d.h. pro Teilung der Gelenkkette G macht das Rad 77 eine Umdrehung), tritt durch die Exzentrizität eine gewisse Kompensation oder Reduktion des Polygoneffektes ein.

In den Figuren 8 bis 20 sind alternative Ausgestaltungen eines Gelenkkettenantriebes dargestellt Diese basieren auf einem Gelenkkettenantrieb, bei welchem ein Motor beziehungsweise ein Motor mit Getriebe (Getriebemotor) M (dargestellt durch eine rechteckige Kontur in den Figuren) an der Welle des Antriebskettenrades A angebracht ist Dabei ist speziell der Rotor des Motors mit der Antriebswelle gekoppelt, während der Stator, das heißt das äußere Gehäuse des Motors, in Grenzen frei beweglich ist Für das vorliegende Beispiel sei angenommen, dass der Motor ein Elektromotor sei. Bei einer Stromzufuhr zum Motor wird der Rotor in Drehung versetzt und dabei auf den Stator ein entgegengesetzt gerichtetes Drehmoment ausgeübt Damit sich der Stator nicht selber entgegengesetzt zum Rotor dreht, ist er an einer Drehmomentstütze abgestützt, zum Beispiel am Boden der Werkshalle. Während beim Stand der Technik zwischen Stator und Drehmomentstütze in Kraftrichtung keine Relativbewegung stattfindet, wird erfindungsgemäß eine bewegliche Abstützung vorgeschlagen. Diese ist bei dem Gelenkkettenantrieb nach Figur 8 dadurch realisiert, dass am Ende des Stators beziehungsweise Motors M drehbeweglich ein Kurvenelement in Form einer Kurvenscheibe 81 angeordnet ist, welche sich auf einem ortsfesten (z.B. mit dem Boden der Werkshalle verbundenen) Abtastelement in Form einer Abtastrolle 82 abstützt. Der Motor M wird dabei vorzugsweise von einer Feder 83 mit definierter Andruckkraft gegen die Abtastrolle 82 gedrückt, so dass er nicht von dieser abhebt. Die Kurvenscheibe 81 wird nun synchron zur Drehung des Antriebskettenrades A in Drehung versetzt, wobei im dargestellten Beispiel die Übertragung der Drehbewegung vom Antriebskettenrad A auf die Kurvenscheibe 81 Ober einen Zugmittelantrieb mit den Rädern R2 am Antriebskettenrad A und R1 an der Kurvenscheibe 81 erfolgt. Um eine Phasenverschiebung zwischen dem Antriebskettenrad A und der Kurvenscheibe 81 zu verhindern, sollte dabei ein formschlüssiger Antrieb mit einem Zahnriemen Z, einer Rollenkette oder dergleichen verwendet werden.

Bei einer Stromzufuhr zum Motor (beziehungsweise dem Anlaufen eines Verbrennungsmotors) wird dessen Rotor in Bewegung versetzt, welcher das Antriebskettenrad A der Gelenkkette antreibt Die Drehung des Antriebskettenrades wird Ober das hiermit gekoppelte Rad R2 und das Zugmittel Z auf das Rad R1 an der Kurvenscheibe 81 übertragen, so dass diese synchron mit einem vorgegebenen Übersetzungsverhältnis gedreht wird und durch ihren Kontakt mit der Abtastrolle 82 den Stator M in gewünschter Welse hebt und senkt. Diese Bewegungen des Stators überlagern sich der relativ zum Stator gleichförmigen Drehung des Rotors, so dass insgesamt am Antriebskettenrad A der gewünschte ungleichformige Drehantrieb entsteht

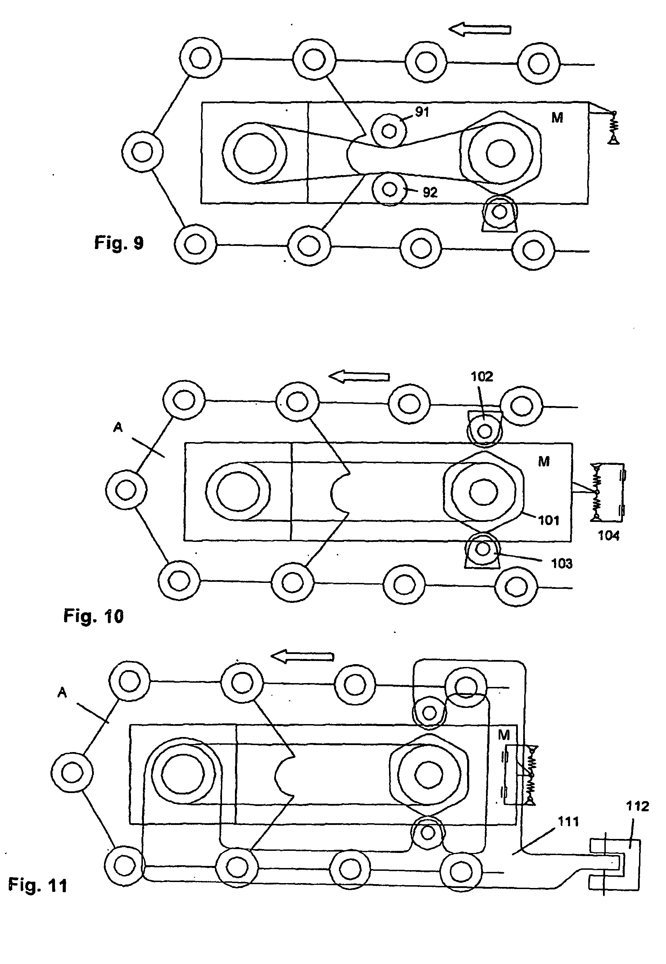

Bei der Ausgestaltung nach Figur 9 ist jeweils eine Spannrolle 91, 92 am Lasttrum und am Leertrum des Zugmittels vorgesehen, um gewünschtenfalls gezielt eine Phasenverschiebung zwischen dem Antriebskettenrad und der Kurvenscheibe vornehmen zu können.

Figur 10 zeigt eine Weiterentwicklung des Systems nach Figur 8, welche für beide Drehrichtungen des Antriebskettenrades A geeignet ist (gezeigt ist eine Drehung des Antriebskettenrades A gegen den Uhrzeigersinn). Zu diesem Zweck ist sowohl unterhalb als auch oberhalb der drehbeweglich am Motor M gelagerten Kurvenscheibe 101 eine ortsfest gelagerte Abtastrolle 102 beziehungsweise 103 vorgesehen. Aufgrund der Kraftverhältnisse legt sich die Kurvenscheibe 101 je nach Drehrichtung an die untere beziehungsweise obere Abtastrolle an, so dass in Zusammenwirkung mit der Kurvenscheibe die gewünschte Aufundabbewegung des Motors erzeugt wird. Der Motor ist ferner vorzugsweise mit einem höhenverstellbaren Feder- und Dämpfungselement 104 gekoppelt, welches für eine Kompensation des Motorgewichts und einen in jedem Falle ausreichenden Kontaktdruck zwischen Kurvenscheibe und Abtastrolle sorgt.

Die in Figur 11 dargestellte Ausführungsform unterscheidet sich von derjenigen aus Figur 10 dadurch, dass die Abtastrollen an einem Trägerelement 111 angeordnet sind, welches mit einem Ende an der Welle des Antriebskettenrades A befestigt und drehbar gelagert ist. Zusätzlich ist eine Justiereinrichtung 112 vorgesehen, mit der sich die genaue Position der Abtastrollen und damit der Phasenwinkel einstellen lässt. Eine derartige Baugruppe lässt sich leichter montieren, da die relevanten Abstände durch das Trägerelement vorgegeben sind.

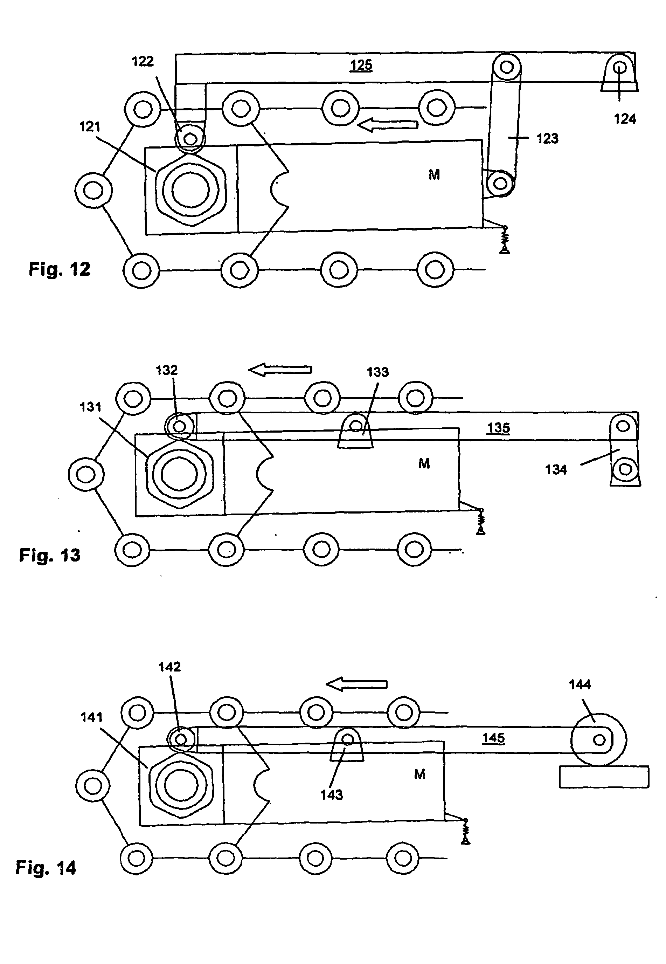

Die Figuren 12 bis 18 zeigen alternative Möglichkeiten zur Bewegung des Motors beziehungsweise Stators M, wobei die Kurvenscheiben 121, 131, 141, 151, 181, 171, 181 jeweils unmittelbar auf der Welle des Antriebskettenrades A angeordnet sind. Die Kurvenscheibe 121, 131 beziehungsweise 141 wird bei den Konstruktionen der Figuren 12 bis 14 von einer Abtastrolle 122, 132 beziehungsweise 142 abgetastet, die ihre Bewegung Ober einen Hebel 125, 135 beziehungsweise 145, der in einem ortsfesten Gelenk 124, 134 oder auf einer Rolle 144 beweglich gelagert ist, und Ober einen Arm 123,133 beziehungsweise 143 auf den Stator/Motor überträgt. Die erläuterten

Varianten können wahlweise je nach den räumlichen Gegebenheiten eingesetzt oder auch abgewandelt werden.

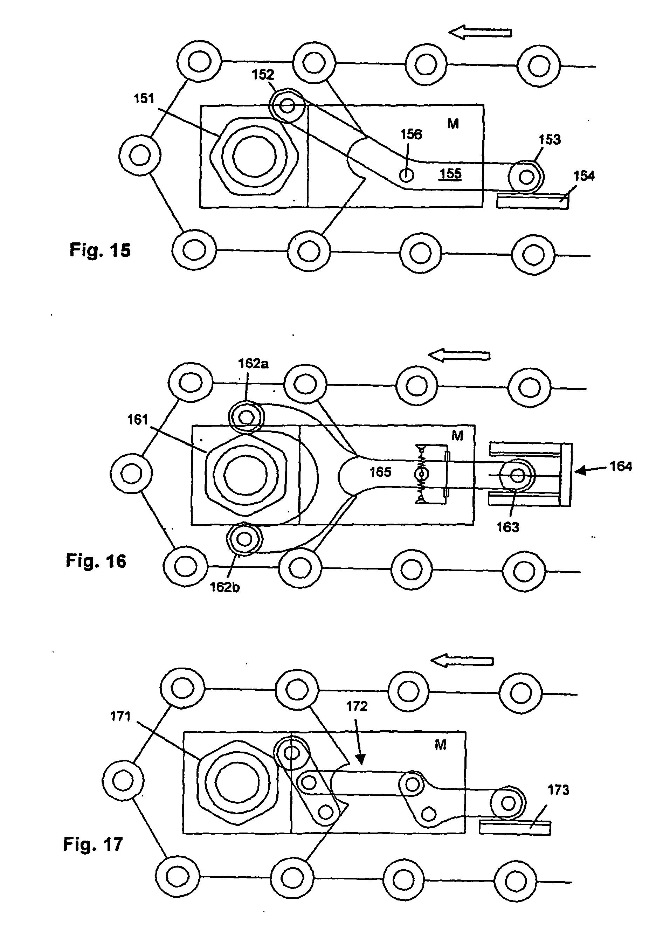

Die Anordnung nach Figur 15 hat eine noch kompaktere Bauweise, wobei ein Hebel 155 in einem Gelenk 156 drehbeweglich mit dem Stator M verbunden ist und am In der Figur linken Ende des Hebels eine Abtastrolle 152, die auf der Kurvenscheibe 151 abrollt, und am rechten Ende des Hebels eine Stützrolle 153, die auf einer gerauschgedämmten ortsfesten Unterlage 154 abrollt, angeordnet sind.

Figur 16 zeigt eine Abwandlung der Konstruktion nach Figur 15, welche im Wesentlichen symmetrisch mit einem gabelförmigen Hebel 165 und einer oberhalb und einer unterhalb der Kurvenscheibe 161 befindlichen Abtastrolle 162a bzw. 162b sowie zwei laufflächen 164 ausgestaltet ist. Diese Konstruktion ermöglicht den Betrieb des Antriebekettenrades in beiden Drehrichtungen.

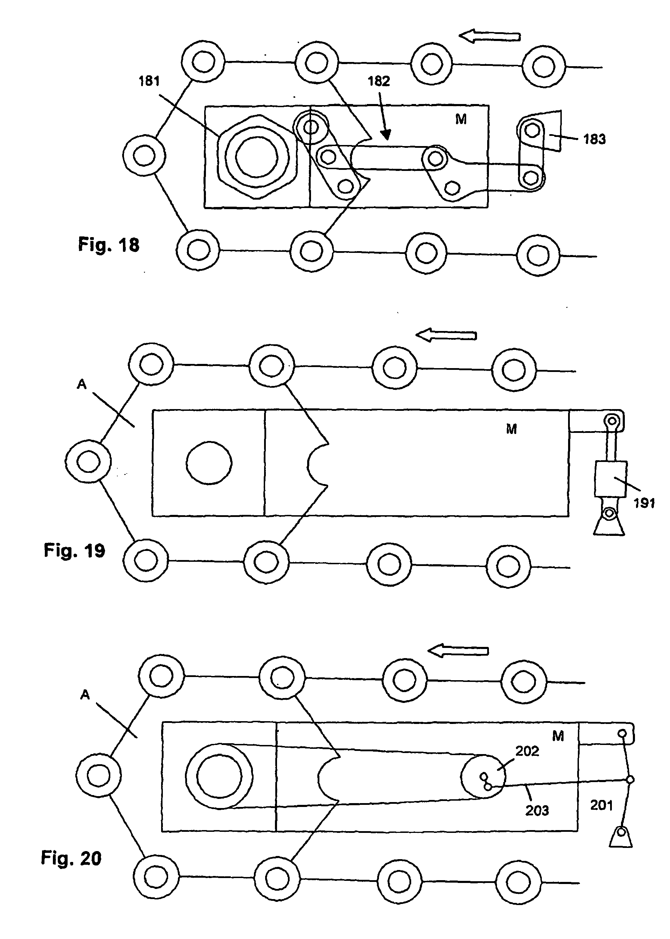

Die Figuren 17 und 18 zeigen eine weitere Variante der Abtastung einer Kurvenscheibe 171 bzw. 181, wobei die verwendete mehrteilige Hebelkonstruktion 172 bzw. 182 Drehgelenke verwendet und einen sehr kompakten Aufbau gewährleistet. Bei Figur 17 stützt sich die Hebelkonstruktion 172 auf einer ortsfesten Unterlage 173 ab, während bei Figur 18 die Hebelkonstruktion 182 ortsfest drehgelenkig (in einem Gelenk 183) gelagert ist.

Zwei nicht beanspruchte alternative Möglichkeiten zur Bewegung des Motors bzw. Stators M sind in den Figuren 19 und 20 dargestellt. Bei dem Gelenkkettenantrieb nach Figur 19 wird der Motor M von einer aktiven

Hebeeinrichtung wie z.B. einem hydraulischen Zylinder 191 in der gewünschten Weise periodisch geschwenkt.

Bei der nicht beanspruchte Variante nach Figur 20 ist ein mit dem Antriebskettenrad A gekoppelter Kurbelantrieb 202 vorgesehen, welcher über ein Pleuel 203 einen an einem Ende ortsfest montierten Kniehebel 201 periodisch einknickt. Am anderen Ende des Kniehebels ist der Motor M angebracht, so dass dieser durch das Einknicken in der gewünschten Weise auf und ab bewegt wird.

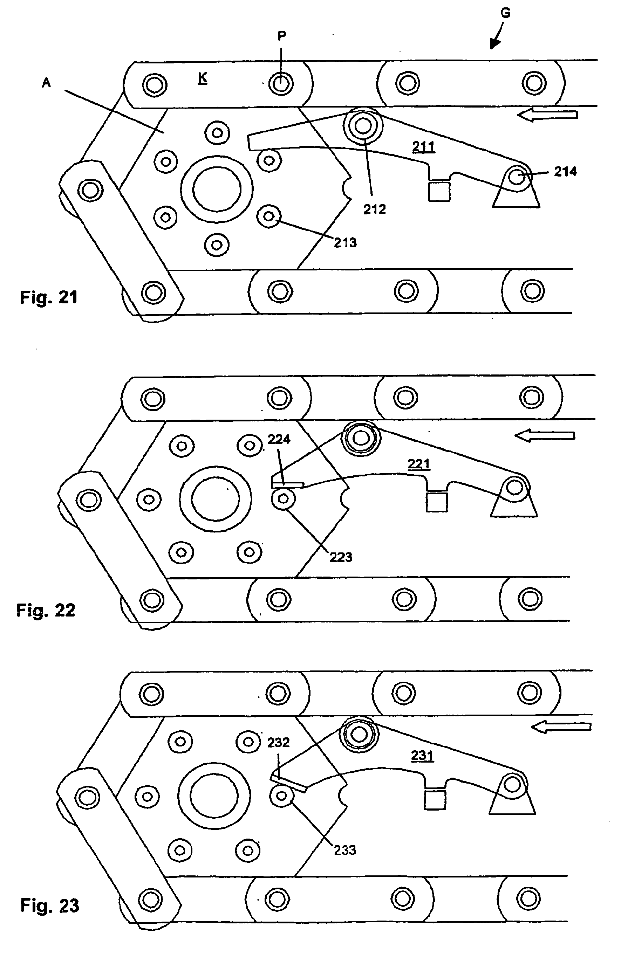

Die Figuren 21 bis 25 stellen verschiedene nicht beanspruchte Lösungen dar, um den Einlaufstoß zu reduzieren, welcher beim Auftreffen eines sich abwärts bewegenden Gelenkdrehpunktes P auf die sich aufwärts bewegende Zahnlücke des Antriebskettenrades A entsteht.

Bei der in Figur 21 gezeigten ersten Variante ist ein Stützelement in Form einer die Laschen der Kettenglieder K kontaktierenden Stützrolle 212 vorgesehen. Die Stützrolle 212 ist dabei an einem Hebel 211 angebracht, welcher mit einem Ende in einer ortsfesten Drehachse 214 gelagert ist. Das andere Ende des Hebels 211 ragt in den Bereich neben dem Antriebskettenrad A hinein. Dort sind um den Mittelpunkt des Antriebskettenrades A gleichmäßig verteilt so viele Mitnehmer-Nocken 213 beidseitig auf dem Antriebskettenrad A angeordnet, wie dieses Zähne bzw. Zahnlücken hat Bei der Drehung des Antriebskettenrades A kommen die Mitnehmer-Nokken 213 mit dem genannten Ende des Hebels 211 in Kontakt und heben dieses ein Stück weit an, was zu einer entsprechenden Anhebung der Stützrolle 212 und damit der Gelenkkette G führt Durch diese Anhebung verringert sich die Geschwindigkeitsdifferenz zwischen der Gelenkkette G und somit auch des gerade einlaufenden Gelenkdrehpunktes P und der zugehörigen Zahnlücke des Antriebskettenrades A. Die Mitnehmer 213 können insbesondere aus Kunststoff, aus gehärtetem Stahl, als Rollen, als

Kugellager oder als Kugellagerrollen ausgebildet sein. Die Stützrolle 212 kann aus geräuschdämmend beschichtetem Metall (z.B. Stahl, Aluminiumdruckguss) bestehen, oder ihre

Oberfläche kann aus ungehärtetem oder gehärtetem Metall sein, das über dämmende Zwischenschichten gelagert ist.

Die Ausgestaltung nach Figur 22 unterscheidet sich von derjenigen nach Figur 21 vornehmlich dadurch, dass die Mitnehmer 223 auf Winkel der Zahnlücken des Antrlebskettenrades liegen, wodurch sie in einem größeren radialen Abstand von der Welle angeordnet werden können. Ferner ist die am Ende des Hebels 221 ausgebildete Kontaktschicht 224 zu den Mitnehmem geräuschdämmend ausgebildet.

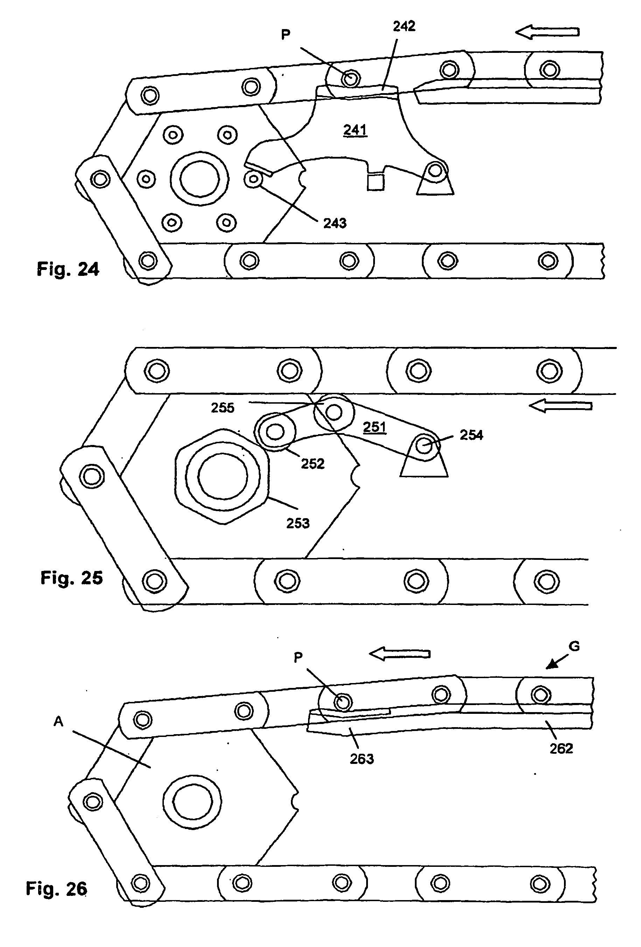

Die Ausgestaltung nach Figur 23 unterscheidet sich von derjenigen nach Figur 21 bzw. 22 dadurch, dass das die Mitnehmer 233 abtastende Ende 232 des Hebels 231 abgeschrägt ausgebildet ist. Dieses Ende kann auch eine gekrümmte Form haben und/oder in seiner Neigung verstellbar sein. Figur 24 zeigt eine Gelenkkettenführung ähnlich Figur 23, wobei jedoch an dem Stützelement 241 eine Gleitfläche 242 aus einem geräuschdämmenden und reibungsreduzierendem Material ausgebildet ist, die mit den Gelenkdrehpunkten P (Bolzen, Buchse, Schonrolle, Laufrolle etc.) in Kontakt tritt.

Bei Figur 25 wird eine ruhigere Bewegung des Hebels 251 mit der Stützrolle 255 erzielt, indem das freie Ende des Hebels mit einer Rolle 252 versehen ist, die eine auf der Welle des Antriebskettenrades angeordnete Kurvenscheibe 253 abtastet. Vorzugsweise umgreift der Hebel 251 (vor und hinter der Zeichenebene in Figur 25) das Antriebskettenrad gabelförmig, so dass beidseits des Antriebskettenrades jeweils eine Stützrolle 255 angeordnet ist.

In Figur 26 ist eine nicht beanspruchte. Lösung gezeigt, welche insbesondere bei Förderketten zur Anwendung kommen kann. Bei diesen wird häufig die Gelenkkette auf einer Laufschiene 262 geradlinig geführt, von welcher sie kurz vor dem Antriebskettenrad A nach unten abknickt Durch dieses Abknicken wird verhindert, dass auf der Gelenkkette transportierte Güter durch den Polygoneffekt angehoben bzw. gesenkt werden und auf das Antriebskettenrad A aufstoßen.

Bei der in Figur 26 dargestellten Ausgestaltung ist die mit den Gelenkdrehpunkten P in Kontakt stehende Laufschiene 262 in den abknickenden Bereich hinein verlängert, wobei sie zunächst dem abknickenden Verlauf folgt. An ihrem Ende weist sie jedoch einen ansteigenden Abschnitt 263 auf. Dieser führt dazu, dass ein darüber laufender Gefenkdrehpunkt P und hierüber auch der gerade im Einlauf in die Zahnlücke des Antriebskettenrades A befindliche (und In Zugrichtung hiervor gelegene) Gelenkdrehpunkt P angehoben wird, um die gewünschte Reduzierung der Geschwindigkeitsdifferenzen zu erreichen. Die Anhebung bleibt jedoch insgesamt unter dem Niveau der Laufschiene 262, so dass sie sich nicht auf den Kauf der restlichen Gelenkkette G auswirkt.

Die Figuren 27 bis 30 zeigen einen nicht beanspruchte "passiven" Gelenkkettenantrieb. Dieser enthält ein Antriebskettenrad A, um das die Gelenkkette G Im dargestellten Beispiel um 180° umläuft, so dass sie eine Richtungsumkehr vollzieht. Das Antriebskettenrad A kann daher auch als Umlenkrad bezeichnet werden. Anders als bei den Figuren 1 bis 20 wird das Umlenkrad A nicht aktiv angetrieben, sondern im Prinzip nur passiv von der Gelenkkette mitgedreht. Aufgrund des Polygoneffektes führt dabei eine gleichförmige lineare Bewegungsgeschwindigkeit der

Gelenkkette G zur einer ungleichförmigen Winkelgeschwindigkeit des Umlenkrades A, was aufgrund der Trägheit des Umlenkrades A und der damit gekoppelten Massen wiederum Rückwirkungen auf die Gelenkkette G hat und dort zu Geschwindigkeitsschwankungen führt.

Zur Kompensation der genannten Geschwindigkeitsschwankungen ist bei den Figuren 27 bis 30 eine drehbar gelagerte Schwungmasse S vorgesehen, die Ober verschiedene Kopplungsmechanismen mit dem Umlenkrad A in Wirkverbindung steht, wobei diese Mechanismen so ausgestaltet sind, dass sie eine gleichförmige Rotation der Schwungmasse S in eine ungleichförmige, den Polygoneffekt kompensierende Drehung des Umlenkrades A umwandeln. Wenn die Schwungmasse S als (Trägheits-)"Motor" betrachtet wird, können somit grundsätzlich für die genannten Mechanismen alle oben erläuterten, von aktiven Antriebssystemen bekannten Konstruktionen verwendet werden. Figur 27 zeigt einen ersten Mechanismus, bei dem auf der Welle des Umlenkrades A eine Kurvenscheibe 605 angeordnet ist. Die erwähnte Schwungmasse S ist mit einer Drehwelle 601 am (in der Figur oberen) Ende eines Hebels 602 gelagert, weicher seinerseits an seinem unteren Ende in einem ortsfesten Gelenk 603 schwenkbeweglich gelagert ist Ferner sitzt auf der Drehweile 601 ein Reibrad 606, welches auf einer auf der Welle des Umlenkrades A angeordneten Kurvenscheibe 605 abrollt. Der Hebel 602 wird dabei durch eine nicht näher dargestellte Feder in Kontakt gegen die Kurvenscheibe 605 gedrückt. Durch die Reibung zwischen dem Reibrad 606 und der Kurvenscheibe 605 werden die Drehungen von Schwungmasse S und Umlenkrad A gekoppelt, wobei durch entsprechende Auslegung der Kurvenscheibe 605 erreicht werden kann, dass gerade eine gleichförmige Drehung der Schwungmasse S In eine den Polygoneffekt kompensierende ungleichförmige Drehung des Umlenkrades A umgewandelt wird, d.h. wiederum zu einer gleichförmigen Bahngeschwindigkeit der Gelenkkette G führt.

In Figur 28 ist eine Abwandlung des Mechanismus von Figur 27 dargestellt, bei der die Schwungmasse S in einem ortsfesten Drehgelenk gelagert ist. Auf der Welle 611 der Schwungmasse S ist schwenkbeweglich das Ende eines Hebels 612 angeordnet, an dessen anderem Ende ein Reibrad 616 drehbar angebracht ist. Ferner läuft ein Riemen Z um die Welle 611 und das Reibrad 616 um, wobei der Rücken dieses Riemens Im Bereich des Reibrades 616 am Umfang einer auf der Welle des Umlenkrades A angeordneten Kurvenscheibe 615 abrollt und hierdurch für eine Reibungskopplung sorgt Ein definierter Anlagedruck zwischen dem Reibrad 616 und der Kurvenscheibe 615 wird durch eine am Hebel 612 angreifende Feder 614 gewährleistet

Figur 29 zeigt eine Ausführungsform, bei der die Schwungmasse S mit ihrer Welle 621 an einem Träger 628 (rechteckiger Block) angeordnet ist. Der Träger 628 ist seinerseits mit seinem in der Figur linken Ende auf der Welle des Antriebskettenrades A schwenkbeweglich gelagert, so dass zusammen mit dem Träger auch die Schwungmasse S um diese Welle schwenkbar ist. Ein Zugmittel Z koppelt ein Rad R1 auf der Welle 621 der Schwungmasse S mit einem Rad R1 auf der Welle des Umlenkrades A. Der Träger 628 ist in einem Gelenkbolzen 629 mit einem Hebel 622 gekoppelt, weiches über einen Zwischenarm 627 in einem ortsfesten Drehgelenk 623 schwenkbar gelagert ist. Zusammen mit dem Hebel 622 kann daher auch der Träger 628 und mit diesem die Welle 621 der Schwungmasse S verschwenkt werden (s. Doppelpfeil). Am freien Ende des Hebels 622 ist eine drehbewegliche Abtastrolle 626 angeordnet, welche auf einer

Kurvenscheibe 625 abrollt, die auf der Welle des Umlenkrades A sitzt. Eine am Hebel 622 angreifende Feder 624 sorgt dabei für eine ständige Anlage der Abtastrolle 626 an der Kurvenscheibe 625. Über den beschriebenen Abtastmechanismus erfolgt eine Aufundabbewegung der Schwungmasse S synchron zur Drehung des Umlenkrades A. Diese wirkt sich bei entsprechender Formgebung der Kurvenscheibe 625 kompensierend auf den Polygoneffekt aus. Die Funktion des Mechanismus ist ähnlich wie bei den Ausführungsformen der Figuren 8 bis 20, wobei der Träger 628 dem dortigen Stator des Getriebemotors entspricht und vorausgesetzt sei, dass das Übersetzungsverhältnis der Räder R1:R2 ungleich Eins ist.

Figur 30 zeigt eine weitere Ausführungsform, welche analog zu den Gelenkketbenantrieben nach den Figuren 2 bis 4 ist, wobei anstelle des Motors die Schwungmasse S dient, die in einer ortsfesten Drehachse gelagert ist. Ein auf der Welle 631 der Schwungmasse S sitzendes Rad R1 ist über ein umlaufendes Zugmittel Z mit einem auf der Welle des Umlenkrades A sitzenden Rad R2 gekoppelt. Des Weiteren ist ein Hebel 632 vorhanden, welcher in einem ortsfesten Drehgelenk 637 gelagert ist und an einem Ende eine Abtastrolle 636 trägt, die auf einer Kurvenscheibe 635 abroilt, weiche auf der Welle des Umlenkrades A sitzt. Mittels einer Feder 634 wird der Hebel 632 gegen die Kurvenscheibe 635 gedrückt. Weiterhin trägt der Hebel 632 zwei Spannrollen 633a und 633b, die am oberen bzw. unteren Trum des Zugmittels Z anliegen. Bei einer Bewegung des Hebels 632 entsprechend der Kurvenscheibe 635 sorgen die Spannrollen 633a und 633b dann für eine Veränderung der effektiven Längen der Trume, was zu der gewünschten ungleichförmigen Kopplung zwischen der Schwungmasse S und dem Umlenkrad A führt. Es sei darauf hingewiesen, dass ein derartiges System aus geometrischen Gründen eine gewisse Elastizität aufweisen muss, um verschiedene Schwenkstellungen des Hebels 632 zu erlauben. Zum Beispiel kann das Zugmittel Z ein langenelashscher Riemen sein, oder mindestens eine der Spannrollen 633a, 633b kann verschiebebeweglich am Hebel 632 gelagert werden.

In Figur 31 ist schematisch eine Seitenansicht eines erfindungsgemäßen Gelenkkettenantriebs gemäß einem weiteren Aspekt der Erfindung dargestellt, wobei es sich in diesem Beispiel um einen Zwischenantrieb handelt, der in eine gestreckte Gelenkkette G eingreift. Die Gelenkkette G besteht aus einzelnen Kettengliedem K, die in Gelenkdrehpunkten P (Bolzen, Buchsen etc.) schwenkbeweglich miteinander verknüpft sind. Durch den Zwischenantrieb soll die Bewegung der Gelenkkette in Pfeilrichtung unterstützt werden. Durch eventuelle Ergänzung weiterer. Zwischenantriebe auf der Förderstrecke wird erreicht, dass die in der Gelenkkette G herrschenden Zugkräfte nicht zu hoch werden.

Der Zwischenantrieb der Gelenkkette G erfolgt grundsätzlich durch ein von einem Motor M rotierend um eine Welle W angetriebenes Antriebsrad A, welches mit Zähnen Z in die Lücken zwischen den Kettengliedem K eingreift und dabei eine Zugbewegung auf die Gelenkdrehpunkte P überträgt. Beim Stand der Technik wird für einen derartigen Zwischenantrieb im Allgemeinen ein mit gleichförmiger Drehzahl angetriebenes Antriebsrad mit feststehenden Zähnen und einer ortsfesten Welle W verwendet. Dies hat jedoch den Nachteil, dass die Geschwindigkeitsübertragung auf die Gelenkkette G aufgrund des sogenannten Polygoneffektes (variierender effektiver Abstand eines Zahnes zur Drehachse) ungleichmäßig wird. Ferner kommt es zu einer Relativbewegung zwischen den Zähnen und den Kettengliedem K, was aufgrund der gleichzeitig wirkenden hohen Kräfte einen großen Verschleiß zur Folge hat. Nicht zuletzt entstehen auch beim Einlaufen der Gelenkkette G in das Antriebsrad Impulsstöße, die zu einem Verschleiß und zu einer Geräuschentwicklung führen. Um die genannten Probleme zu minimieren, ist erfindungsgemäß vorgesehen, dass die Welle W des Antriebsrades A - und damit das Antriebsrad A selbst - parallel verschiebebeweglich (innerhalb der Zeichenebene von Figur 31) gelagert wird. Während der Drehung des Antriebsrades A kann sie daher synchron so verlagert werden, dass den geschilderten Effekten entgegengewirkt wird.

Ein entsprechender Bewegungsmechanismus für die Welle W ist bei der Ausgestaltung gemäß Figur 31 durch einen starren Träger 511 realisiert, welcher in einem ortsfesten Drehpunkt 510 schwenkbeweglich gelagert ist. An dem Träger 511 ist wiederum die Welle W gelagert, so dass diese bei einer Schwenkbewegung des Trägers 511 um den Drehpunkt 510 mitgenommen wird. Die Schwenkbewegung des Trägers 511 wird durch ein Kurvenrad 513 verursacht, weiches drehbeweglich an einem (dem Drehpunkt 510 gegenüberliegenden) Ende des Trägers 511 gelagert ist und eine ortsfeste Abtastrolle 512 abtastet. Das Kurvenrad 513 ist über ein Zugmittel 514 (Kette, Riemen etc.) mit der Welle W gekoppelt, so dass es sich hierzu synchron dreht (und im dargestellten Beispiel im Verhältnis 1:1, was jedoch nicht zwingend ist). Ferner weist das Kurvenrad 513 dieselbe Periodizität seiner Umfangskontur auf wie das Antriebsrad A. Das heißt, dass es entsprechend den sechs Zähnen Z des Antriebsrades A sechseckig ausgebildet ist. Wenn die Welle W somit eine Drehbewegung um 360°/ 6 = 60° ausführt und damit die Zähne des Antriebsrades A wieder eine deckungsgleiche Position annehmen, hat sich auch das Kurvenrad 513 um genau eine Periode weitergedreht und wieder eine deckungsgleiche Position angenommen. Die Schwenkbewegung des Trägers 511 um den Drehpunkt 510 erfolgt somit synchron zur Drehung der Welle W sowie entsprechend der Periode der Zahnteilung des Antriebsrades A

Die wie beschrieben erzeugte Auf-und-ab Bewegung der Welle W wird durch entsprechende Auslegung des Kurvenrades 513 so dimensioniert, dass der Kontaktpunkt X zwischen dem in die Gelenkkette G gerade eingreifenden Zahn Z und dem Gelenkdrehpunkt P (welcher bei ortsfester Welle W und feststehenden Zähnen Z einen Kreisbogen um die Wellenachse beschreiben würde) sich im Wesentlichen linear in der Ebene der Gelenkkette G bewegt.

Zusätzlich zur Parallelverschiebung der Welle W ist bei der in Figur 31 dargestellten Ausführungsform eine weitere Maßnahme zur Vergleichmäßigung des Antriebs vorgesehen. Diese besteht entsprechend der DE 199 45 921 A1 darin, dass die Zähne Z als im Wesentlichen L-förmige Segmente ausgebildet sind, welche jeweils in einer (zur Welle W parallelen) Drehachse D am Umfang des Antriebsrades A gelagert sind. Die Zähne Z weisen ferner jeweils eine Abtastrolle R auf, mit welcher sie unter dem Druck einer nicht näher dargestellten Feder an einem Kurvenelement K entlang fahren. Das Kurvenelement K ist am Träger 511 fixiert, so dass es an der Drehung des Antriebsrades A nicht teilnimmt, wohl jedoch an der Parallelverschiebung der Welle W.

Die abgetastete Kontur des Kurvenelementes K ist so ausgelegt, dass die Zähne Z während ihres Eingriffes in die Gelenkkette G im Wesentlichen eine Verschiebung mit gleichbleibender Orientierung im Raum, d.h. ohne Rotation um eine Körperachse ausführen. Da sich der Drehpunkt D der Zähne Z auf einem Kreisbogen um die Welle W bewegt, wird eine solche Parallelverschiebung erreicht, wenn die Rolle R auf einem entsprechenden kreisbogenförmigen Abschnitt des Kurvenelementes K entlang fährt.

Zusammen mit der vorstehend beschriebenen Auf-und-ab Bewegung der Welle W wird somit insgesamt eine Bewegung der Zähne Z erzeugt, die im Eingriffsbereich in die Gelenkkette G einer idealen linearen translatorischen Bewegung entspricht. Hierdurch wird sowohl ein Anheben bzw. Absenken der Gelenkkette G aus ihrer Bewegungsebene verhindert als auch eine Relativbewegung zwischen den Zähnen Z und den Gelenkdrehpunkten P ausgeschaltet. Durch die Eigenbewegung der Zähne Z Ist es ferner möglich, die Zahnlücken taschenförmig auszubilden, so dass sie während des Eingriffs die Gelenkdrehpunkte P gut umfassen und für eine sichere Führung sorgen sowie ein Abheben der Gelenkkette G nach oben verhindern.

Durch die oben beschriebenen Maßnahmen wird eine möglichst geradlinige geometrische Bahn des Kontaktpunktes X zwischen Gelenkkette G und Zähnen Z erreicht. Zeitlich wird die Bewegung des Kontaktpunktes X jedoch noch ungleichförmig erfolgen, wenn die Welle W mit gleichförmiger Winkelgeschwindigkeit angetrieben wird. Erfindungsgemäß wird auch dieser unerwünschte Effekt durch entsprechende Maßnahmen ausgeschaltet. Vorliegend anwendbare Möglichkeiten für einen den Polygoneffekt eliminierende ungleichförmigen Antrieb der Welle W wurden oben In Bezug auf die Figuren 1 bis 20 beschrieben. Bei der Ausgestaltung gemäß Figur 31 ist diesbezüglich eine spezielle Variante realisiert, bei welcher der Antrieb des Antriebsrades A über einen Motor M erfolgt, dessen Rotor mit der Welle W gekoppelt ist und dessen Stator schwenkbeweglich um die Welle gelagert ist Die Schwenkbewegung des Stators wird durch ein zweites Kurvenrad 516 erzeugt, das mit dem Stator verbunden ist und über ein Zugmittel 517 von der Welle W angetrieben wird. Das zweite Kurvenrad 516 tastet ein am Träger 511 angeordnetes Abtastelement 518 ab und erzeugt so die gewünschte periodische Schwenkbewegung des Stators relativ zum Träger 511. Der Kontakt zwischen Kurvenelement 516 und Abtastelement 518 wird dabei Ober einen Federmechanismus 515 ständig aufrecht erhalten. Die erzeugte Schwenkbewegung des Stators überlagert sich der relativ zum Stator gleichmäßigen Drehbewegung des Rotors, so dass die Welle W insgesamt sich mit ungleichförmiger Drehzahl dreht Bei entsprechender Dimensionierung des zweiten Kurvenrades 516 kann dabei erreicht werden, dass sich der Kontaktpunkt X zwischen Gelenkkette G und Zähnen Z im Wesentlichen mit gleichförmiger Geschwindigkeit bewegt

Es versteht sich, dass die oben beschriebenen Bewegungen der Zähne Z, der Welle W und des Motors M sich gegenseitig beeinflussen. Die Auslegung der Kurvenelemente K, 513 und 516 ist daher vom Fachmann eng aufeinander abgestimmt auszuführen.

Figur 32 zeigt eine zweite Variante eines erfindungsgemäßen Gelenkkettenantriebs, wobei identische Bauelemente zu Figur 31 hier und im Folgenden durch dieselben Bezugszeichen benannt sind und nachstehend nicht erneut erläutert werden. Der wesentliche Unterschied zur Ausgestaltung nach Figur 31 besteht darin, dass der Träger 521 für die Welle W in einem Parallelogrammgelenk gelagert ist, welches durch zwei Stabgelenke 520a, 520b gebildet wird, die jeweils einen ortsfesten Drehpunkt D1 und einen Drehpunkt D2 am Träger 521 aufweisen.

Weiterhin ist in Figur 32 eine andere Anordnung des Kurvenrades 523 am Träger 521 gezeigt, um zu demonstrieren, dass der Gelenkkettenantrieb je nach den räumlichen Gegebenheiten verschieden konstruiert und sehr kompakt untergebracht werden kann.

Figur 33 zeigt eine Variante des Gelenkkettenantriebs nach Figur 32, wobei der Unterschied darin besteht, dass das Kurvenrad 533, welches die Verschiebebewegung der Welle W verursacht, unmittelbar auf der Welle W selbst angeordnet ist. Die Bereitstellung eines separaten Antriebsmechanismus für das Kurvenelement kann somit entfallen, und es wird eine besonders kompakte Bauform erreicht

Figur 34 zeigt eine Variante des Gelenkkettenantriebs nach Figur 33, wobei der Unterschied darin besteht, dass der Träger 541 in einer uniaxialen linearen Führung 540 geführt ist, so dass die Welle W nur eine exakt lineare Bewegung (senkrecht zur Laufebene der Gelenkkette G) ausführen kann.

Figur 35 zeigt eine Variante des Gelenkkettenantriebs nach Figur 34, wobei der Unterschied zum einen darin besteht, dass der Träger 551 in einer biaxialen linearen Führung 550 geführt ist, so dass er beliebige Translationen, jedoch keine Rotationen ausführen kann. Weiterhin sind am Träger 551 zwei von der Welle W angetriebene Kurvenräder 553a, 553b angeordnet, die jeweils an einem ortsfesten Abtastelement 552a bzw. 552b entlang fahren, wobei das Kurvenrad 553a eine Auslenkung des Trägers 551 vertikal zur Gelenkkette G und das Kurvenrad 553b eine Auslenkung des Trägers 551 in Richtung der Gelenkkette G erzeugt. Letztere ermöglicht eine Kompensation des Polygoneffektes, so dass der Motor M nicht mehr gegenüber dem Träger 551 geschwenkt werden muss.

Figur 36 zeigt eine Variante des Gelenkkettenantriebs nach Figur 35, wobei der Unterschied darin besteht, dass die Kurvenräder 563a und 563b unmittelbar auf der Welle W angeordnet sind.

Die oben erläuterten Gelenkkettenantriebe nutzen die Kombination einer Eigenbewegung der Zähne, einer Parallelverschiebung der Welle sowie einer ungleichförmigen Antriebsdrehzahl, um einen möglichst gleichmäßigen Kettenantrieb zu verwirklichen. Dieser ist im Ergebnis zumindest näherungsweise polygonwirkungsfrei, das heißt, dass die in Eingriff mit der Gelenkkette G stehenden Zähne Z eine im Wesentlichen konstante lineare Bahngeschwindigkeit haben. Weiterhin ist der Gelenkkettenantrieb stoß- und geräuscharm beziehungsweise -frei, da ein Einlaufen der Gelenkkette G in die Zahnlücken bei annähernd gleichen Geschwindigkeiten erzielt wird.

Von besonderer Bedeutung ist ferner eine hohe Verschleißfreiheit, da die Relativbewegung zwischen den in die Gelenkkette G eingreifenden Zähnen Z und der Gelenkkette minimiert ist. Die Zähne Z können daher z.B. auch aus Kunststoff hergestellt werden. Eine Relativbewegung findet nur an den Gelenken D der Zähne und den entsprechenden Abtastrollen R statt. Hierbei handelt es sich jedoch um relativ wenige Bauteile, die durch gezielte Verwendung geeigneter Lager beziehungsweise Werkstoffpaarungen sowie durch ausreichende Dimensionierung gegenüber dem auftretenden Verschleiß gesichert werden können. Weiterhin ist eine einfache Austauschbarkeit solcher Verschleißteile gewährleistet.

Der Verschleiß der Gelenkkette G wird dadurch minimiert, dass wie bereits erwähnt eine Relativbewegung zu den Zähnen des Antriebsrades unterbleibt und dass zusätzlich aufgrund der linearen Bewegung der Zähne im Bereich des Eingriffes kein Abknicken der Kettenglieder erfolgt. Während in den Figuren 31 bis 36 ein Zwischenantrieb mit einem Eingriff in eine gestreckte Förderkette dargestellt ist, kann das System prinzipiell auch bei einer Umschlingung des Antriebsrades A eingesetzt werden. Der Vorteil von Zwischenantrieben liegt indes darin, dass diese die Realisierung auch längerer Förderanlagen erlauben, ohne dass die eingesetzten Gelenkketten dadurch übermäßig stark und schwer dimensioniert werden müssen. Es kann daher vorteilhafterweise selbst bei unterschiedlichen Achsabständen in einer Anlage derselbe (leichte) Kettentyp verwendet werden. Ferner kann durch den Einsatz von Zwischenantrieben kurz vor einer Umlenkung die Zugkraft während der Umlenkung und damit der resultierend Verschleiß verringert werden.

Die erfindungsgemäßen Zwischenantriebe haben dabei gegenüber anderen aus dem Stand der Technik bekannten Zwischenantrieben mit umlaufenden Zwischenantriebsketten den Vorteil, sehr kompakt und nur an einer Seite der Kette (insbesondere Unterseite) angeordnet zu sein. Ferner benötigen sie keine Mittel für ein Andrücken der Kette auf den zugehörigen Zahn bzw. die zugehörige Zahnlücke.

**Patentansprüche**

1. Gelenkkettenantrieb enthaltend

 - ein Antriebskettenrad (A) für eine Gelenkkette (G);
 - ein Antriebssystem, welches das Antriebskettenrad zum Ausgleich von Geschwindigkeitsschwankungen der Gelenkkette mit ungleichförmiger Drehzahl antreiben kann;
 wobei das Antriebssystem enthält:
 - einen Motor (M), dessen Rotor mit dem Antriebskettenrad (A) gekoppelt ist und dessen Stator beweglich ist;
 - einen Mechanismus zur Bewegung des Stators synchron zur
 Drehung des Antriebskettenrades,
 **dadurch gekennzeichnet, dass**
 der Gelenkkettenantrieb ein mit dem Antriebskettenrad (A) gekoppeltes Kurvenelement (81, 101, 121, 131, 141, 151, 161, 171, 181) enthält, welches von einem Abtastelement (82, 102, 103, 122, 132, 142, 152, 162a, 162b) abgetastet wird, wobei die erzeugte Relativbewegung zwischen dem Kurvenelement und dem Abtastelement auf den Stator übertragen wird.

2. Gelenkkettenantrieb nach Anspruch 1, **dadurch gekennzeichnet, dass** das Kurvenelement (81, 101) mit dem Stator drehbeweglich verbunden ist und an mindestens einem ortsfesten Abtastelement (82, 102, 103) entlang läuft.

3. Gelenkkettenantrieb nach Anspruch 1, **dadurch gekennzeichnet, dass** zwei Abtastelemente (102, 103) und/oder zwei Kurvenelemente vorhanden sind, wobei je nach Drehrichtung des Antriebskettenrades (A) eines der Elemente wirksam ist.

4. Gelenkkettenantrieb nach mindestens einem der Ansprüche 1 bis 3, **dadurch gekennzeichnet, dass** das Kurvenelement (121, 131, 141, 151, 161, 171, 181) auf der Welle des Antriebskettenrades (A) angeordnet ist, und dass das Abtastelement (122, 132, 142, 152, 162a, 162b) am Arm eines mit dem Stator verbundenen Hebels (125, 135, 145, 155, 165, 172, 182) angeordnet ist.

**Claims**

1. Link-chain drive containing

- a driving chain wheel (A) for a link chain (G);
- a drive system, which can drive the driving chain wheel at non-uniform rotational speed for the purpose of compensating for fluctuations in speed of the link chain;
wherein the drive system contains:
- a motor (M), of which the rotor is coupled to the driving chain wheel (A) and the stator is movable;
- a mechanism for moving the stator synchronously in relation to the rotation of the driving chain wheel,
**characterized in that**
the link-chain drive contains a cam element (81, 101, 121, 131, 141, 151, 161, 171, 181) which is coupled to the driving chain wheel (A) and is sensed by a sensing element (82, 102, 103, 122, 132, 142, 152, 162a, 162b), wherein the relative movement generated between the cam element and the sensing element is transmitted to the stator.

2. Link-chain drive according to Claim 1, **characterized in that** the cam element (81, 101) is connected in a rotatable manner to the stator and runs along at least one fixed-location sensing element (82, 102, 103).

3. Link-chain drive according to Claim 1, **characterized in that** two sensing elements (102, 103) and/or two cam elements are present, wherein, depending on the direction of rotation of the driving chain wheel (A), one of the elements is active.

4. Link-chain drive according to at least one of Claims 1 to 3, **characterized in that** the cam element (121, 131, 141, 151, 161, 171, 181) is arranged on the shaft of the driving chain wheel (A), and **in that** the sensing element (122, 132, 142, 152, 162a, 162b) is arranged on the arm of a lever (125, 135, 145, 155, 165, 172, 182), which is connected to the stator.

**Revendications**

1. Mécanisme d'entraînement à chaîne à articulations comprenant

- une roue à chaîne d'entraînement (A) pour une chaîne à articulations (G) ;
- un système d'entraînement qui peut entraîner la roue à chaîne d'entraînement pour compenser les fluctuations de la vitesse de la chaîne à articulations avec une vitesse de rotation non régulière ;
le système d'entraînement comprenant :
- un moteur (M) dont le rotor est accouplé à la roue à chaîne d'entraînement (A) et dont le stator est mobile ;
- un mécanisme pour déplacer le stator de manière synchrone par rapport à la rotation de la roue à chaîne d'entraînement,
**caractérisé en ce que**
le mécanisme d'entraînement à chaîne à articulations comprend un élément à cames (81, 101, 121, 131, 141, 151, 161, 171, 181) accouplé à la roue à chaîne d'entraînement (A), lequel est palpé par un élément de palpage (82, 102, 103, 122, 132, 142, 152, 162a, 162b), le mouvement relatif généré entre l'élément à cames et l'élément de palpage étant transmis au stator.

2. Mécanisme d'entraînement à chaîne à articulations selon la revendication 1, **caractérisé en ce que** l'élément à cames (81, 101) est en liaison à mobilité rotationnelle avec le stator et défile le long d'au moins un élément de palpage (82, 102, 103) en position fixe.

3. Mécanisme d'entraînement à chaîne à articulations selon la revendication 1, **caractérisé en ce qu'**il existe deux éléments de palpage (102, 103) et/ou deux éléments à cames, l'un des éléments étant actif suivant le sens de rotation de la roue à chaîne d'entraînement (A).

**4.** Mécanisme d'entraînement à chaîne à articulations selon au moins l'une des revendications 1 à 3, **caractérisé en ce que** l'élément à cames (121, 131, 141, 151, 161, 171, 181) est arrangé sur l'arbre de la roue à chaîne d'entraînement (A) et **en ce que** l'élément de palpage (122, 132, 142, 152, 162a, 162b) est arrangé sur le bras d'un levier (125, 135, 145, 155, 165, 172, 182) relié au stator.

**Fig. 1**

**Fig. 2**

**Fig. 3**

Fig. 4

Fig. 5

Fig. 6

**Fig. 7a**

**Fig. 7b**

**Fig. 8**

Fig. 9

Fig. 10

Fig. 11

**Fig. 12**

**Fig. 13**

**Fig. 14**

**Fig. 15**

151 152 156 M 155 153 154

**Fig. 16**

161 162a 162b 165 M 163 164

**Fig. 17**

171 172 M 173

181

182

M

183

**Fig. 18**

A

M

191

**Fig. 19**

A

M

202

203

201

**Fig. 20**

Fig. 21

Fig. 22

Fig. 23

Fig. 24

Fig. 25

Fig. 26

**Fig. 27**

**Fig. 28**

**Fig. 29**

**Fig. 30**

**Fig. 31**

**Fig. 32**

**Fig. 33**

**Fig. 34**

**Fig. 35**

**Fig. 36**

**EP 2 123 937 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3018357 C2
- DE 3031130 C2
- DD 247731 A1
- DE 19936742 A1
- DE 19945921 A1